(19) Europäisches Patentamt
European Patent Office
Office européen des brevets

(11) Publication number: **0 336 606 B1**

(12) # EUROPEAN PATENT SPECIFICATION

(45) Date of publication of patent specification: **08.09.93**

(51) Int. Cl.[5]: **C08K 5/00**, //(C08K5/00,5:13, 5:52)

(21) Application number: **89302871.2**

(22) Date of filing: **22.03.89**

(54) **Composition of stabilized synthetic resin.**

(30) Priority: **02.04.88 JP 81866/88**

(43) Date of publication of application:
**11.10.89 Bulletin 89/41**

(45) Publication of the grant of the patent:
**08.09.93 Bulletin 93/36**

(84) Designated Contracting States:
**BE CH DE FR GB LI NL**

(56) References cited:
**EP-A- 0 086 990**
**EP-A- 0 280 179**

**CHEMICAL ABSTRACTS, vol. 108, no. 24, 13th June 1988, pages 53-54, abstract no. 205832t, Columbus, Ohio, US; & JP-A-63 17 944**

(73) Proprietor: **ASAHI DENKA KOGYO KABUSHIKI KAISHA**
**2-35, Higashi-Ogu 7-chome**
**Arakawa-ku Tokyo(JP)**

(72) Inventor: **Nishikawa, Kazunori**
**1-256, Matsudominami**
**Matsudo-shi Chiba(JP)**
Inventor: **Haruna, Tohru**
**969-4, Simohideya**
**Okegawa-shi Saitama(JP)**
Inventor: **Hamajima, Mitsuhiro**
**88, Tobari**
**Kashiwa-shi Chiba(JP)**

(74) Representative: **Taylor, Phillip Kenneth et al**
**W.P. THOMPSON & CO. Coopers Building**
**Church Street**
**Liverpool L1 3AB (GB)**

EP 0 336 606 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to compositions of stabilized synthetic resins and more specifically to those compositions of synthetic resins which are made more stable and resistant to deterioration by heat and light, by adding particular cyclic phosphonite compounds and particular phenol ester antioxidants.

It is well known that polyethylene, polypropylene, ABS resins, polyvinyl chloride resins and other similar synthetic resins deteriorate, become coloured or suffer a lowering of their mechanical strength by the action of heat and light, thus becoming less endurable to long-term use.

In order to prevent such deterioration, many additives have so far been used either independently or in combination. It is also known that among these additives, the phosphonite compounds are most effective in improving heat resistance and controlling colouration. The phosphite compounds generally used are trialkyl phosphite, triallyl phosphite, alkyl-allyl phosphite and other triorganic phosphite compounds or acidphosphite compounds having a hydroxyl group instead of an organic group.

Even these phosphites however, still leave much to be desired not only in their stabilizing effect but also in water resistance.

Of the organic phosphite compounds, such cyclic phosphite compounds as bisphenols possess a good stabilizing effect and water resistance. For example, United States Patent Official Gazette No. 3297631 proposes 2,2′-methylenebis (dialkylphenyl) phosphite compounds, but the stabilizing effect of these compounds is still insufficient to meet practical requirements. Japanese Provisional Patent Publication No. 100391-1979 proposes, as an improved phosphite compound, a cyclic phosphite compound of orthobiphenol and Japanese Provisional Patent Publications No. 114595-1982 and No.103-537-1983 cyclic phosphite compounds of 2,2′-bisphenols respectively but those substances have not proved to be effective and are not viable in practice due to the complicated manufacturing method necessary for the production.

Phenol based antioxidants are generally used as base antioxidants for a wide variety of synthetic resins and so far a great number of compounds are known; mononuclear phenols such as 2,6-ditributyl-4-methyl phenols, polynuclear phenols such as alkylidenebis or trisphenols, esters such as 3,5-ditributyl-4-hydroxyphenyl propionic acid.

Further, it is known that synergism can result from combined use of these phenol antioxidants and various phosphite compounds, but the effect of conventional combinations is not satisfactory in practice in that they have insufficient stability, long-term heat resistance and resistance to colouration by radiation of heat.

It has now been found that a remarkable improvement in processing stability, heat resistance and light resistance can be achieved by combined addition of the cyclic alkylphosphite compounds of 2,2′-alkylidenebis phenol and $\beta$-(3,5-dialkyl-4-hydroxyphenyl) propionic acid ester compounds.

The present invention provides a composition of stabilized synthetic resin composition characterised in that for each 100 parts of synthetic resin the composition contains 0.001 to 10 parts preferably 0.01 to 3 parts by weight of a compound represented by the general formula (I) and 0.001 to 10 parts preferably 0.01 to 3 parts by weight of a compound represented by the general formula (II) below:

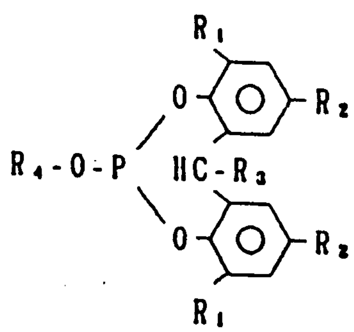

( I )

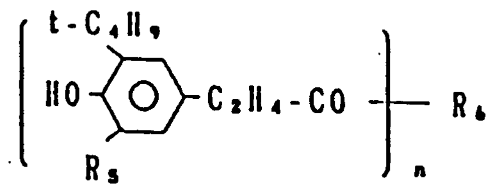

( II )

in which R1 is tertiary-butyl (t-butyl) or tertiary-amyl (t-amyl), R2 is an alkyl having 1 to 9 carbon atoms, R3 is hydrogen or an alkyl having 1 to 4 carbon atoms, R4 is an alkyl having 1 to 30 carbon atoms, R5 is an alkyl having 1 to 4 carbon atoms, R6 is a residual group of a monohydric alcohol, a dihydric alcohol, a trihydric alcohol or a tetrahydric alcohol from which its hydrogen is removed and n is a number of 1 to 4.

In the above Formulas (I) and (II), $R_2$ may, for example, be methyl, ethyl, propyl, isopropyl, butyl, secondary butyl, tertiary butyl, isobutyl, amyl, yertiary amyl, hexyl, heptyl, octyl, isooctyl, 2-ethylhexyl, tertiary octyl, nonyl or tertiary nonyl. $R_3$ and $R_5$ independently may be, for example, methyl, ethyl, propyl, isopropyl, butyl, secondary butyl, tertiary butyl, isobutyl; and examples of $R_4$ are methyl, ethyl, propyl, isopropyl, butyl, secondary butyl, tertiary butyl, isobutyl, amyl, tertiary amyl, hexyl, heptyl, octyl, isooctyl, 2-ethylhexyl, tertiary octyl, nonyl, tertiary nonyl, decyl, isodecyl, dodecyl, tetradecyl, hexadecyl, octadecyl, eicosyl, docosyl, tetracosyl and triacontyl.

Examples of $R_6$ are methanol, ethanol, butanol, octanol, 2-ethylhexanol, isooctanol, decanol, dodecanol, tetradecanol, hexadecanol, octadecanol and other monohydroxy alcohol; ethylene glycol, propylene glycol, 1,4-butanediol, 1,6-hexanediol, 1,10-decanediol, diethylene glycol, dipropylene glycol, triethylene glycol, thiodiethylene glycol, 3,9-bis (2-hydroxy-1,1-dimethylethyl)-2,4,8,10-tetraoxaspiro((5,5))undecane, 2,2-bis(4-(2-hydroxyethoxy-phenyl)propane and other dihydric alcohols; glycerin, trimethylolethane, trimethylolpropane, tris(2-hydroxyethyl) isocyanurate and other trihydric alcohols; pentaerythritol, diglycerin, ditrimethylolpropane and other tetra hydric alcohols.

Typical phosphite compounds as represented by the above general formula (I) which may be used in the present invention are the following:

I - 1 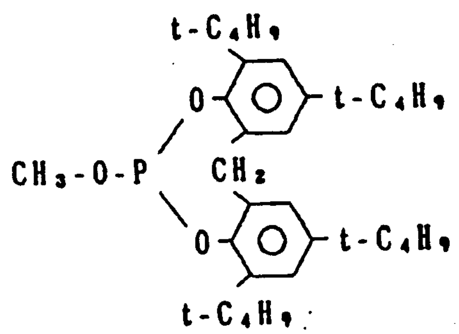

I − 2

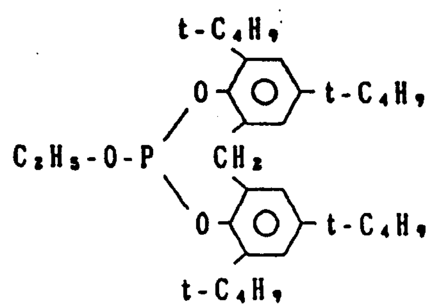

I − 3

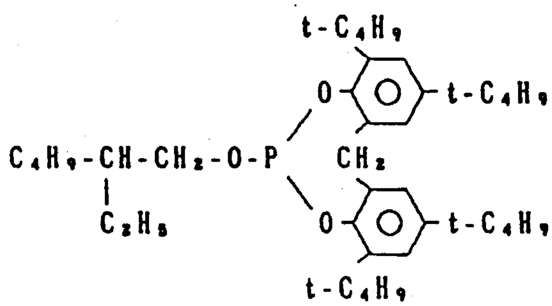

I − 4

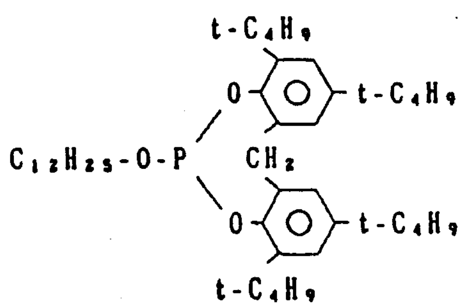

I − 5

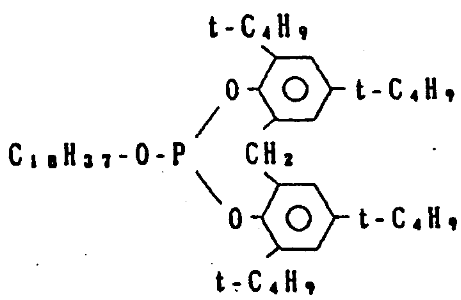

I − 6

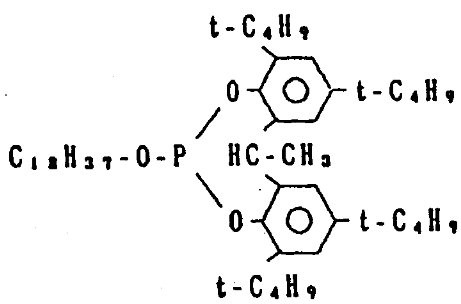

I − 7 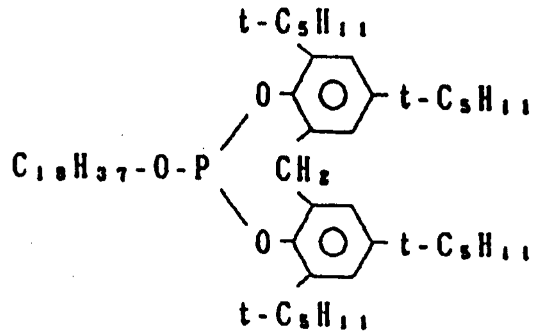

I − 8 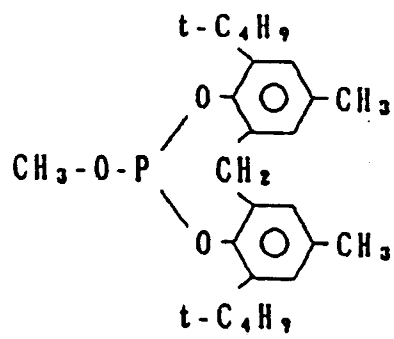

I − 9 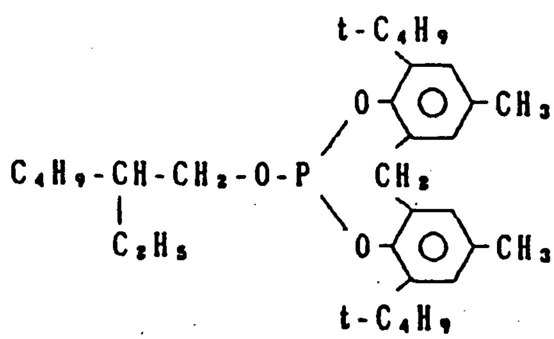

I −10 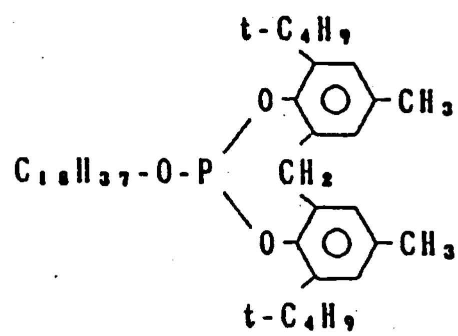

The compound represented by the formula (I) can be obtained by, for example, reacting phosphorous trichloride with 2,2′-alkylidenebisphenol to form a chloro-intermediate and replacing the chlorine with $R_4$-0- by reaction with an alcohol represented by $R_4$-OH.

The present invention will be further illustrated by reference to the following preparation which is intended as illustrative only and not to be construed as limiting the scope of the invention.

PREPARTION

2,2′-methylene bis (4,6-dit- butylphenyl)-stearyl-phosphite (Compound I-5)

42.5g of 2,2′-methylenebis (4,6-ditributylphenol), 100g of toluene and 0.86g of triethylamine were placed into a 500 ml four-neck flask. 16.5 g of phosphorous trichloride were then added dropwise at 60 to 65 ° C whilst the mixture was stirred. The temperature of the mixture was then gradually raised to reflux whilst pouring a stream of nitrogen therethrough, then stirred under reflux for 2 hours.

Excess phosphorous trichloride was distilled off under reduced pressure. After cooling to 60 ° C, 12.1g of triethylamine and 27g of stearyl alcohol were added and the resulting mixture was stirred at 80 ° C for 4 hours. After cooling, the hydrochloride of triethylamine thus produced was filtered off and the solvent distilled off.

Crystallization of the residue from methanol gave a white power having a melting point of 65 ° C.

IR ($cm^{-1}$)

2925, 2850: methylene, 1230, 1200: t-butyl, 1100: -0-phenyl 1020: P-O-alkyl, 840: P-O-phenyl

$H^1$-NMR (60 MHz, with TMS as standard, in $CDCl_3$)

Delta Value; 0.8: 3H, t, methyl group (stearyl group terminal)
1.2 to 1.3: 73H, sss, tributyl group and stearyl group
3.2 to 4.4: 4H, dd, methylene group and $-O-CH_2-$
7.2: 4H, s, aromatic hydrogen

Typical phenolic antioxidants which may be used in the composition of the present invention and represented by the foregoing general formula (II) are enumerated below.

In these compounds R and R′ symbolize respectively the following groups:

R : 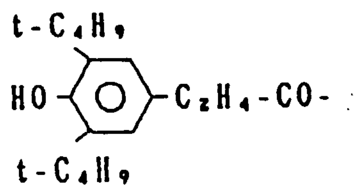 R' : 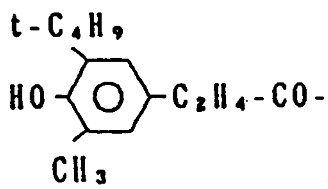

II - 1 $R-O-C_{18}H_{37}$

II - 2 $R'-O-C_{18}H_{37}$

II - 3 $R-O-C_6H_{12}-O-R$

II - 4 $R'-O(C_2H_4O)_3-R'$

II - 5 $R-O-C_2H_4-S-C_2H_4-O-R$

II − 6 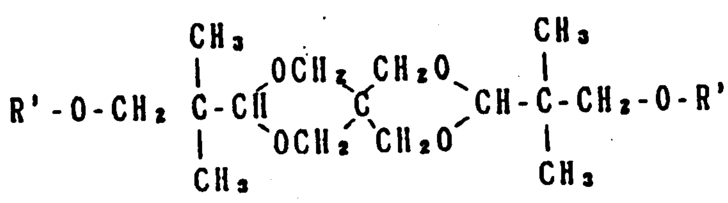

II − 7

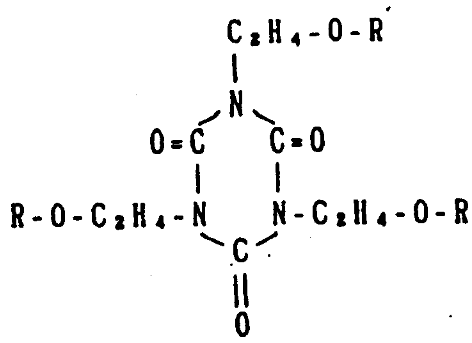

II − 8

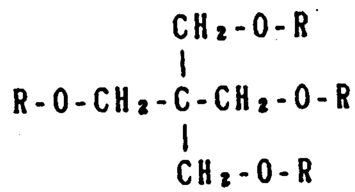

The method of incorporating to the synthetic resin such compounds as represented by the foregoing formulas (I) and (II) in the synthetic resin is not limited and any of the methods usually applied may be used.

For example, the additives of formulae I and II may be incorporated by dry blending a powder or pellets of the synthetic resin with powdered additive, spraying an additive solution or melt over a powder or pellets of synthetic resin or else blending dispersion of the additive(s) with a latex of the synthetic resin and then salting-out.

Some examples of the synthetic resin which can be stabilized by the present invention are: polyethylene, polypropylene, poly-3-methylbutene and other α-olefin polymers or ethylene-vinyl acetate copolymer, ethylene-propylene copolymer as well as other polyolefins and copolymers thereof; such synthetic resins including halogens as polyvinyl chloride, polyvinyl bromide, polyvinyl fluoride, polvinylidene chloride, chlorinated polyethylene, chlorinated polypropylene, polyvinylidene fluoride, brominated polyethylene, chlorinated rubber, vinyl chloride-vinyl acetate copolymer, vinyl chloride-ethylene copolymer, vinyl chloride-propylene copolymer, vinyl chloride-styrene copolymer, vinyl chloride-isobutylene copolymer, vinyl chloride-vinylidene chloride copolymer, vinyl chloride-styrene-maleic anhydride terpolymer, vinyl chloride-styrene-acrylonitrile copolymer, vinyl chloride-butadiene copolymer, vinyl chloride-chlorinated propylene-vinyl acetate terpolymer, vinyl chlorideacrylic ester copolymer, vinyl chloride-maleate ester copolymer, vinyl chloride-metacrylate ester copolymer, vinyl chloride-acrylonitrile copolymer; copolymers of petroleum resin, coumarone resin, polystyrene, polyvinyl acetate, acrylic resin, polyacrilonitrile and styrene with other monomers (for example, maleic anhydride, butadiene, acrylonitrile); ABS resins, so-called heat-resistant ABS resin with part or all of styrene component thereof substituted by α-methyl-styrene, so-called high heat-resistant ABS resin in which maleimides are copolymerized as a component thereof; such methacrylate resins as acrylic ester-butadiene-styrene copolymer, polymethylmethacrylate; and polyvinyl alcohol, polyvinyl formal, polyvinyl butyral, linear polyester, polyphenylene oxide, polyamide, polycarbonate, polyacetal, polyurethane, cellulosic resins, or phenolic resins, urea resins, melamine resins, epoxy resins, unsaturated polyester resins, and silicon resins.

Further examples of resins which can be stabilized in accordance with the invention are rubbers, such as isoprene rubber, butadiene rubber, acrylonitrile-butadiene copolymer rubber, styrene-butadiene copolymer rubber or blends of these resins.

Adding known phenolic antioxidants to the compositions by this invention will further improve the oxidative stability thereof.

Examples of such phenolic antioxidants are 2,6-di-t-butyl-p-cresol, 2,6-diphenyl-4-octadecyloxyphenol, di-stearyl (3,5-di-t-butyl-4-hydroxybenzyl) phosphonate, 4,4′-thiobis(6-t-butyl-m-cresol), 2-octylthio-4,6-di(3′,5′-dihydroxyphenoxy)-s-triazine, 2,2′-methylenebis(4-methyl-6-t-butylphenol), 2,2′-methylenebis(4-ethyl-6-t-butylphenol) bis((3,3-bis(4′-hydroxy-3′-t-butylphenyl)butylic acid)) glycol ester, 4,4′-butylidenebis(6-t-butyl-m-cresol),2,2′-ethylidenebis(4,6-dit-butylphenol), 2,2′-ethylidenebis(4-sec.-butyl-6-t-butylphenol), 2-t-butyl-4-methyl-6-(2′-acryloyloxine-3′-t-butyl-5′-methylbenzene)phenol, bis((2-t-butyl-4-methyl-6-(2′-hydroxy-3′-t-butyl-5′-methylbenzyl)phenyl))terephtalate, 1,1,3-tris(2′-methyl-4′-hydroxy-5′-t-butylphenyl)butane, 1,3,5-tris(2′-6′-dimethyl-3′-hydroxy-4′-t-butylbenzyl)isocyanurate, 1,3,5-tris(3′,5′-dit-butyl-4′-hydroxybenzyl)isocyanurate, and 1,3,5-tris(3′,5′-dit-butyl-4′-hydroxybenzyl)-2,4,6-trimethylbenzene.

Another improvement can be realized by adding sulfuric antioxidants to the composition of the present invention for further oxidative stability. Examples of these sulfuric antioxidants are dialkylthiodipropionates such as dilauryls, dimyristyls and distearyl esters of thiodiproprionates and β-alkylmercaptopropionic acid esters of such polyols as pentaerythritoltetra(β-dodecylmercaptoproprionate).

The light resistance of the composition by this invention can further be improved by adding thereto such light stabilizers as ultraviolet absorbing agents, hindered amine compounds.

Some examples of these light stabilizers are: 2-hydro-xybenzophenones as 2,4-dihydroxybenzophenone, 2-hydroxy-4-methoxybenzophenone, 2-hydroxy-4-octoxybenzophenone, 5,5′-methylenebis(2-hydroxy-4-methoxybenzophenone); such 2-(2′-hydroxyphenyl) benzotriazoles as 2-(2′-hydroxy-5′-methylphenyl) benzotriazole, 2-(2′-hydroxy-5′-t-octyl-phenyl) benzotriazole, 2-(2′-hydroxy-3′,5′-dit-butyl-phenyl)-benzotriazole, 2-(2′-hydroxy-3′,5′-dit-butyl-phenyl)-5-chlorobenzotriazole, 2-(2′-hydroxy-3′-t-butyl-5′-methylphenyl)-5chlorobenzotriazole, 2-(2′-hydroxy-3′,5′-dicumylphenyl)benzotriazole, 2,2′-methylenebis(4-t-octyl-6-benzotriazoryl) phenol; such benzoates as phenylsalicylate, resorcinol monobenzoate, 2,4-di-t-butylphenyl-3,5′-di-t-butyl-4′-hydroxybenzoate, hexadecyl-3,5-dit-butyl-4-hydroxybenzoate; such substituted oxanhydrides as 2-ethyl-2′-ethoxyoxanhydride, 2-ethoxy-4′-dodecyloxanhydride; such cyanoacrylates as ethyl-α-cyano-β,β-diphenylacrylate, methyl-2-cyano-3methyl-3-(p-methoxyphenyl)acrylate; such hindered amine compounds as 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl)butanetetracarboxylate, tetrakis-(1,2,2,6,6-pentamethyl-4-piperidyl)-1,2,3,4-butanetetracarboxylate, bis (1,2,2,6,6-pentamethyl-4-piperidyl) di-(tridecyl)-1,2,3,4-butane-tetracarboxylate, bis(1,2,2,6,6-pentamethyl-4-piperidyl)-2-butyl-2-(3,5-dit-butyl-4-hydroxybenzyl) malonate, 1-(2-hydroxyethyl)-2,2,6,6-tetramethyl-4-piperidynol/diethyl succinate polycondensate, 1,6-bis(2,2,6,6-tetramethyl-4-piperidyl-amino)hexane/dibromoethane polycondensate, 1,6-bis(2,2,6,6-tetramethyl-4-piperidylamino)hexane/2,4-dichloro-6-teroctylamino-s-triazine polycondensate and 1,6-bis-(2,2,6,6-tetramethyl-4-piperidylamino) hexane/2,4-dichloro-6-morpholino-s-triazine polycondensate.

If desired the compositions of the present invention may also contain one or more of heavy metal inactivation agents, mucleating agents, metallic soap, pigments, fillers (loading agents), organic tin compounds, plasticizers epoxides, blowing (foaming) agents, anti-static agents, flame-retardants, lubricants and process aids.

The present invention will be further illustrated by reference to the following examples which are not to be regarded as limiting.

## Example 1

Pellets are produced by extrusion of 280 ° C from resin compositions having the blending proportions:-

| | |
|---|---|
| Polypropyrene (Profax 6501) | 100 parts in weight |
| Compound II-8 | 0.1 part in weight |
| Calcium Stearate | 0.05 part in weight |
| Specimen Compound | 0.1 part in weight |

The specimen compounds used in this example were compounds I-1 to I-10 referred to hereinbefore and for comparison two further specimen compounds 1*1 and 1*2 were also used having the formula:-

*1 : 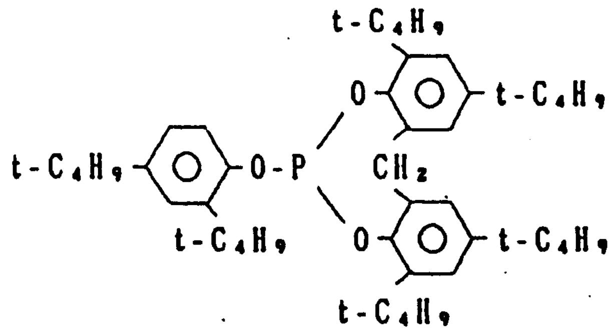

*2 : 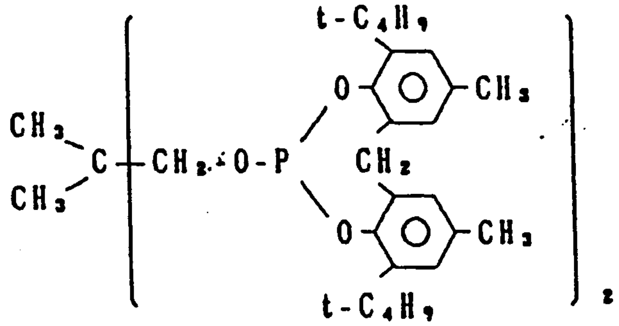

All twelve sets of pellets separately underwent injection moulding to be made into test pieces 1mm in thickness.

Test pieces were given the following tests: a thermal stability test in an oven at 160 ° C; to examine their light resistance they were irradiated by fluorescent lamp for 72 hours, and the yellowing factor thereof was measured by Hunder colour difference meter.

Further, to evaluate their processing safety factor, the variation of their melt index with extrusion was measured once at 280 ° C and then repeated five times (MI(1) and MI(5): g/10 min., 230 ° C, load: 2160 g). The results of the tests are given in Table 1 hereafter.

TABLE 1

| No. | SPECIMEN COMPOUND | THERMAL STABILITY | YELLOWING FACTOR | MELT INDEX | | |
|---|---|---|---|---|---|---|
| | | | | M I (1) | M I (5) | M I (5)/M I (1) |
| COMPARATIVE EXAMPLE | | HOURS | | | | |
| 1 – 1 | COMP. COMPOUND 1 *1 | 252 | 11.6 | 2.0 | 3.8 | 1.90 |
| 1 – 2 | COMP. COMPOUND 2 *2 | 264 | 9.8 | 1.9 | 3.5 | 1.84 |
| EXAMPLE | | | | | | |
| 1 – 1 | COMPOUND I-1 | 324 | 7.4 | 1.7 | 2.3 | 1.35 |
| 1 – 2 | COMPOUND I-2 | 324 | 7.5 | 1.8 | 2.3 | 1.28 |
| 1 – 3 | COMPOUND I-3 | 324 | 7.4 | 1.7 | 2.2 | 1.29 |
| 1 – 4 | COMPOUND I-4 | 336 | 7.4 | 1.8 | 2.3 | 1.28 |
| 1 – 5 | COMPOUND I-5 | 336 | 7.4 | 1.7 | 2.2 | 1.29 |
| 1 – 6 | COMPOUND I-6 | 324 | 7.5 | 1.8 | 2.3 | 1.28 |
| 1 – 7 | COMPOUND I-7 | 312 | 7.6 | 1.8 | 2.5 | 1.39 |
| 1 – 8 | COMPOUND I-8 | 324 | 7.5 | 1.7 | 2.3 | 1.35 |
| 1 – 9 | COMPOUND I-9 | 324 | 7.5 | 1.8 | 2.4 | 1.33 |
| 1 – 10 | COMPOUND I-10 | 336 | 7.4 | 1.7 | 2.3 | 1.35 |

Example 2

Test pieces were made as in Example 1 using compositions having the blending proportions:

| | |
|---|---|
| Polypropyrene (Profax 6501) | 100 parts in weight |
| Calcium Stearate | 0.05 part in weight |
| Compound I-5 | 0.1 part in weight |
| Specimen Compound | 0.1 part in weight |

in which the specimen compound was compounds $II^{-1}$ to II 8 referred to hereinabefore and for comparison the three compounds set out in Table 2 below in respect of Comparative Examples 2-1 and 2-2. The test pieces were subjected to a processing stability test as in Example 1, the results being set out in Table 2.

**TABLE 2**

| | SPECIMEN COMPOUND | MI(1)/MI(5) |
|---|---|---|
| COMPARATIVE EXAMPLE | | |
| 2-1 | 4,4'-n-butylidenebis(2-t-butyl -5-methylphenol) | 2.05 |
| 2-2 | 1,1,3-tris(3-t-butyl-4-hydroxy -5-methylphenyl)butane | 1.82 |
| 2-3 | Ethylenebis((3,3-bis(3-t-butyl -4-hydroxyphenyl)butylate) | 1.86 |
| EXAMPLE | | |
| 2-1 | Compound II-1 | 1.29 |
| 2-2 | Compound II-2 | 1.35 |
| 2-3 | Compound II-3 | 1.35 |
| 2-4 | Compound II-4 | 1.39 |
| 2-5 | Compound II-5 | 1.39 |
| 2-6 | Compound II-6 | 1.28 |
| 2-7 | Compound II-7 | 1.35 |
| 2-8 | Compound II-8 | 1.29 |

Example 3

The following compounding ingredients were first extruded at 250°, then injection molded at 250° to be made into test pieces 1 mm thick.

With these test pieces a thermal stability test in an oven at 160°C was performed, whose results are shown in Table 3.

| | |
|---|---|
| Polypropyrene (Profax 6501) | 80 parts in weight |
| Talc | 20 parts in weight |
| Compound II-8 | 0.1 part in weight |
| Calcium Stearate | 0.05 part in weight |
| Diatearylthiodipropionate | 0.2 part in weight |
| Specimen Compound | 0.1 part in weight |

TABLE 3

| | SPECIMEN COMPOUND | THERMAL STABILITY |
|---|---|---|
| COMPARATIVE EXAMPLE | | HOURS |
| 3-1 | None | 264 |
| 3-2 | Comparison Compound 1*1 | 336 |
| 3-3 | Comparison Compound 2*2 | 360 |
| EXAMPLE | | |
| 3-1 | Compound I-1 | 432 |
| 3-2 | Compound I-3 | 408 |
| 3-3 | Compound I-4 | 456 |
| 3-4 | Compound I-5 | 456 |
| 3-5 | Compound I-6 | 432 |
| 3-6 | Compound I-10 | 456 |

Example 4

100 parts in weight of unsaturated linear low density polyethylene, 0.02 part in weight of compound II-2 and 0.02 part of specimen compounds were put on a Brabender plastograph and blended for 60 minutes under the condition of 230° x 80 rpm to see variation of the yellowing factor and carbonyl index (CI), whose results are shown in Table 4.

**TABLE 4**

| | SPECIMEN COMPOUND | CI | YELLOWING FACTOR |
|---|---|---|---|
| COMPARATIVE EXAMPLE | | | |
| 4-1 | None | 2.05 | 50.3 |
| 4-2 | Comparison Compound 1*1 | 1.95 | 46.5 |
| 4-3 | Comparison Compound 2*2 | 1.60 | 41.7 |
| EXAMPLE | | | |
| 4-1 | Compound I-2 | 1.25 | 35.2 |
| 4-2 | Compound I-4 | 1.30 | 35.8 |
| 4-3 | Compound I-5 | 1.25 | 34.6 |
| 4-4 | Compound I-6 | 1.30 | 35.5 |
| 4-5 | Compound I-8 | 1.30 | 36.0 |
| 4-6 | Compound I-9 | 1.30 | 35.9 |

Example 4

Compositions having the blending proportioning indicated below, were extruded at 240 °C into pellets, which were thereafter injection moulded at 280 °C to form test pieces of 1mm in thickness. The whiteness of each test piece was then measured after reheating for 30 minutes in an oven at 180 °C and the Izod impact strength (kg/cm$^2$) after two weeks' heating in an oven at 120 °C. The results are shown in Table 5.

| COMPOSITION BLENDING PROPORTIONS | |
|---|---|
| Unstabilized ABS resin | 100 parts in weight |
| Calcium Stearate | 0.5 part in weight |
| Compound II-2 | 0.2 part in weight |
| Specimen Compound | 0.3 part in weight |

## TABLE 5

| SPECIMEN COMPOUND | | IZOD IMPACT STRENGTH | WHITENESS |
|---|---|---|---|
| COMPARATIVE EXAMPLE | | | |
| 5-1 | None | 9.2 | 20.6 |
| 5-2 | Comparison Compound 1 *1 | 11.6 | 23.7 |
| 5-3 | Comparison Compound 2 *2 | 13.8 | 26.5 |
| Example | | | |
| 5-1 | Compound I-1 | 16.4 | 32.0 |
| 5-2 | Compound I-2 | 16.4 | 32.0 |
| 5-3 | Compound I-3 | 16.0 | 31.5 |
| 5-4 | Compound I-4 | 16.4 | 31.9 |
| 5-5 | Compound I-5 | 16.6 | 32.4 |
| 5-6 | Compound I-6 | 16.5 | 31.5 |
| 5-7 | Compound I-7 | 15.8 | 31.3 |
| 5-8 | Compound I-8 | 16.4 | 31.8 |
| 5-9 | Compound I-9 | 16.1 | 31.6 |
| 5-10 | Compound I-10 | 16.6 | 32.2 |

Example 6

Compositions having the blending proportion shown below, were extruded at 280 °C to form pellets. After holding the pellets at 280 °C for 5 minutes, they were injection moulded into test pieces of 12.7 mm in thickness. Measurement of Izod impact strength and whiteness were carried out on the test pieces. The

results are shown in Table 6.

| COMPOSITION BLENDING PROPORTION | |
|---|---|
| Polycarbonate resin | 50 parts in weight |
| Heat resistant ABS resin ( -methylstyrene content: 40%) | 50 parts in weight |
| Compound II-4 | 0.3 part in weight |
| Specimen Compound | 0.3 part in weight |

TABLE 6

| | SPECIMEN COMPOUND | IZOD IMPACT STRENGTH | WHITENESS |
|---|---|---|---|
| COMPARATIVE EXAMPLE | | | |
| 6-1 | None | | |
| 6-2 | Comparison Compound 1 *1 | 1.0 | 26.3 |
| 6-3 | Comparison Compound 2 *2 | 1.2 | 28.5 |
| EXAMPLE | | | |
| 6-1 | Compound I-2 | 2.0 | 35.0 |
| 6-2 | Compound I-3 | 1.9 | 34.8 |
| 6-3 | Compound I-5 | 2.1 | 35.3 |
| 6-4 | Compound I-6 | 2.1 | 35.2 |
| 6-5 | Compound I-8 | 2.0 | 35.2 |
| 6-6 | Compound I-10 | 2.1 | 35.3 |

Example 7

45 parts in weight of polyphenylene oxide resin, 55 parts in weight of shock-resistant polystyrene resin, 0.25 part in weight of compound II-6 and 0.5 part in weight of specimen compound were blended. After extruding at 280 ° C, they were injection moulded at 280 ° C to form test pieces. Measurement of the Izod impact strength of the test pieces was effected after two weeks' reheating at 120 ° C.

The results of test are shown in Table 7 hereunder.

**TABLE 7**

| | SPECIMEN COMPOUND | IZOD IMPACT STRENGTH Before Heating | IZOD IMPACT STRENGTH After Heating |
|---|---|---|---|
| COMPARATIVE EXAMPLE | | | |
| 7-1 | Comparison Compound 1 *1 | 11.2 | 6.9 |
| 7-2 | Comparison Compound 2 *2 | 11.5 | 7.8 |
| EXAMPLE | | | |
| 7-1 | Compound I-1 | 12.8 | 11.0 |
| 7-2 | Compound I-2 | 12.7 | 10.9 |
| 7-3 | Compound I-4 | 12.7 | 10.8 |
| 7-4 | Compound I-5 | 12.9 | 11.2 |
| 7-5 | Compound I-6 | 12.8 | 11.0 |
| 7-6 | Compound I-8 | 12.5 | 10.7 |
| 7-7 | Compound I-10 | 12.8 | 11.1 |

## Claims

1. A stabilized synthetic resin composition characterised in that for every 100 parts by weight of synthetic resin, the composition comprises 0.001 to 10 parts by weight of a cyclic alkylphosphite compound of 2,2′-alkylidene-bisphenol having the formula (I) and 0.001 to 10 parts by weight of beta-(3,5-dialkyl-4-hydroxyphenyl)-propionicacid ester having the formula (II):

( I )

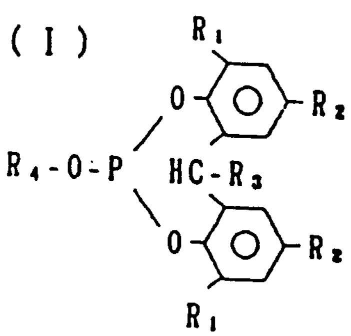

( II )

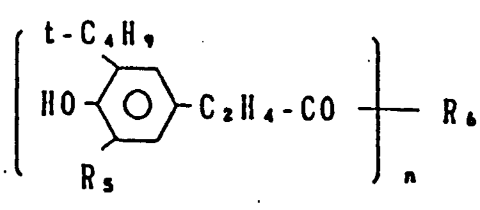

in which R1 is tertiary-butyl or tertiary-amyl; R2 is an alkyl group having 1 to 9 carbon atoms; R3 is hydrogen or an alkyl group having 1 to 4 carbon atoms: R4 is an alkyl group having 1 to 30 carbon atoms: R5 is an alkyl group having 1 to 4 carbon atoms; R6 is a residual group of a monohydric alcohol, a dihydric alcohol, a trihydric alcohol or a tetrahydric alcohol; and n is a number of 1 to 4.

2. A composition as claimed in claim 1, characterised in that for every 100 parts of synthetic resin the composition comprises independently 0.01 to 3 parts by weight of each of the compounds of formulae (I) and (II).

## Patentansprüche

1. Stabilisiertes Kunstharzgemisch, dadurch **gekennzeichnet,** daß auf jeweils 100 Teile Kunstharz das Gemisch 0,001 bis 10 Gew.-Teile einer cyclischen Alkylphosphitverbindung von 2,2'-Alkyliden-bisphenol der allgemeinen Formel I und 0,001 bis 10 Gew.-Teile $\beta$-(3,5-dialkyl-4-hydroxyphenyl)-propionsäureester der allgemeinen Formel II enthält:

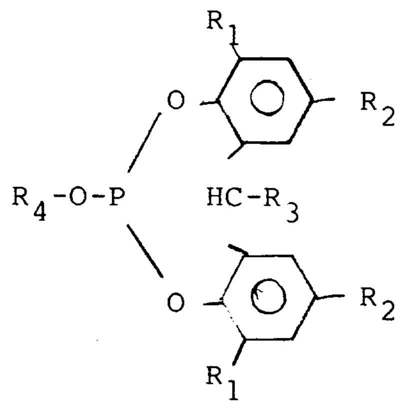

(I)

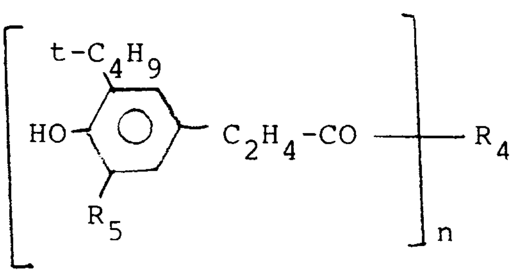

(II)

worin $R_1$ tert.-Butyl oder tert.-Amyl, $R_2$ ein $C_{1-9}$-Alkyl, $R_3$ H oder ein $C_{1-4}$-Alkyl, $R_4$ ein $C_{1-30}$-Alkyl, $R_5$ ein $C_{1-4}$-Alkyl, $R_6$ den Rest eines einwertigen Alkohols, eines Zweiwertigen Alkohols, eines dreiwertigen Alkohols oder vierwertigen Alkohols, und n eine Zahl von 1 bis 4 bedeuten.

2. Gemisch nach Anspruch 1, dadurch **gekennzeichnet,** daß es auf jeweils 100 Gew.-Teile Kunstharz unabhängig voneinander 0,01 bis 3 Gew.-Teile der jeweiligen Verbindung der Formeln I und II enthält.

## Revendications

1. Composition de résine synthétique stabilisée, caractérisée en ce que pour 100 parties en poids de résine synthétique, la composition comprend 0,001 à 10 parties en poids d'un composé alkylphosphite cyclique de 2,2'-alkylidène-bisphénol ayant la formule (I) et 0,001 à 10 parties en poids d'ester d'acide béta-(3,5-dialkyl-4-hydroxyphényl)-propionique ayant la formule (II) :

( I )

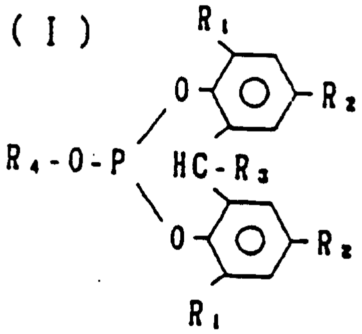

( II )

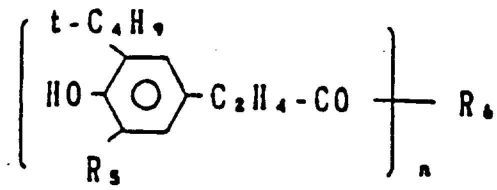

dans lesquelles $R^1$ est un groupe t-butyle ou t-amyle; $R^2$ est un groupe alkyle ayant 1 à 9 atomes de carbone; $R^3$ est un atome d'hydrogène ou un groupe alkyle ayant 1 à 4 atomes de carbone; $R^4$ est un groupe alkyle ayant 1 à 30 atomes de carbone; $R^5$ est un groupe alkyle ayant 1 à 4 atomes de carbone; $R^6$ est un groupe résiduel d'un alcool monohydrique, d'un alcool dihydrique, d'un alcool trihydrique ou d'un alcool tétrahydrique; et n est un nombre de 1 à 4.

2. Composition suivant la revendication 1, caractérisée en ce que pour 100 parties de résine synthétique, la composition comprend indépendamment 0,01 à 3 parties en poids de chacun des composés de formules (I) et (II).